# EUROPEAN PATENT SPECIFICATION

(11) **EP 2 461 674 B1**
(45) Date of publication and mention of the grant of the patent: **15.07.2015**
(21) Application number: 10742538.1
(22) Date of filing: 04.08.2010
(51) Int. Cl.: A01M 29/26

(54) **IMPROVED APPARATUS FOR DELIVERING AN ELECTRIC SHOCK**
VERBESSERTE VORRICHTUNG ZUR VERABREICHUNG VON ELEKTROSCHOCKS
APPAREIL AMÉLIORÉ POUR ADMINISTRER UN CHOC ÉLECTRIQUE

(30) Priority: 04.08.2009 GB 0913534
(43) Date of publication of application: 13.06.2012
(73) Proprietor: Pestration Limited, Washington, Tyne & Waer NE38 0EL (GB)
(72) Inventor: RITSON, Ray, Washington Tyne&Wear NE38 0EL (GB)
(74) Representative: Elsworth, Dominic Stephen
(86) International application number: PCT/GB2010/051284
(87) International publication number: WO 2011/015867

(56) References cited:
- WO-A1-90/11001
- WO-A2-2005/055865
- DE-A1- 3 930 013
- DE-U1- 20 016 374
- US-A1- 2005 183 880
- US-A1- 2010 180 490

## Description

### Field of the Invention

The present invention relates to an apparatus for repelling birds, and in particular to an apparatus for repelling birds capable of supporting significant weight.

### Background of the Invention

Birds often perch on upward facing surfaces of buildings, and can in the process cause a nuisance. Whilst significant problems may be caused to buildings, the problem of nuisance birds is even greater where the surface landed upon by the birds is one used by aircraft for the purpose of landing and take-off. In this situation, the presence of birds may be extremely dangerous. Helicopter landing pads present a particular problem, especially those located on oil rigs, since the oil rig is likely to be the only structure within a large area upon which sea birds may land. Furthermore, they present a very harsh environment in which to operate any apparatus.

Other forms of vermin also present problems which may be addressed by the use of apparatus for delivering an electric shock to the vermin in question. For example, such apparatus may be used to deter rats from entering buildings.

A number of solutions to the above-mentioned problem have been posed. For example, United States Patent 6,006,698 describes an electrical bird repelling device comprising a base made of an insulating material, and one or more electrically conductive rails disposed on the base. An electric potential is applied to each of the rails such that there is a potential difference between the two rails. When a bird lands on the electrical device and bridges the two rails, current flows between the two rails and the bird is given a mild electric shock which repels the bird from the area of the electrical device.

In the device described in US 6,006,698 the electrically conducting metal rails equipped with blades are laid in a base material formed of a polyvinyl chloride (PVC) extruded profile having a hardness of 83. The base has a very low height (2.4mm) the purpose of which is to assist the device blending in with the surface from which birds are to be deterred. The upstanding spikes prevent nesting on the device and are also said to create a noise that is disliked by birds.

DE29610206U1 describes another electric-shock device adapted to deter birds, and comprises a base upon which are mounted alternate positive and negative upstanding tracks. This device is adapted to be mounted on edges of buildings and the like to prevent birds perching thereon.

Keeping surfaces that are to be landed on by aircraft free of birds presents particular problems. Using an electric shock deterrent, one must either rely on a device of the type described above in US 6,006,698 laid on the edge of the surface to deter birds from landing on the whole surface, or alternatively, the device must be either be embedded into the surface, or the device must at least partially cover the surface.

EP1382243 describes an electric-shock sheet which may be laid out across a surface to be kept free of birds, or other vermin. However, such a sheet is not capable of supporting a significant weight without itself being damaged.

DE G 9405347 describes an electrified mat to protect against animals and adapted to be laid out across a surface, such as the floor of a garage or carport. The mat is laid out across the surface and a car may drive over it. The mat comprises a carrier layer 2 and electrified zones 3, which are isolated from each other. The car driver switches off the electrical supply to the mat to reach the vehicle parked in the garage. The construction of the electrified mat in DE G 9405347 comprises a base, a plurality of exposed live wires extending one way across the carrier layer and a plurality of spaced apart clips extending normal to the direction of the live wires and holding them in place.

Whilst the mat described in DE G 9405347 does relate to a mat for use on surface, and for a vehicle to traverse over the mat, the mat is intended for use indoors. The arrangement of the wires would not be conducive to a long service life outdoors. Further, the mat would not appear from the drawings to have significant strength.

US2005/0183880 describes an anti-roosting device in which an electrical conductor is embedded in a track.

DE 3930013 describes an electrical device for defending garden beds against snails which comprises a base with electrical conductors mounted therein. The conductors comprise a copper core, surrounded by a plastic sheath.

DE20016374U1 describes a bird repelling device comprising two separated electrically conducting wires arranged in separate profiled sections.. The profiled sections are connected to a base plate are spaced apart vertically from the base plate.

It would therefore be desirable to provide an improved apparatus for delivering an electric shock.

### Summary of the Invention

According to the invention there is provided an electric shock delivery apparatus as specified in Claim 1.

According to the invention the electrically conductive element comprises a conductive polymer material. Advantageously, the conductive element is formed into the said shape and dimension by forming the said conductive polymer material. The electrically conductive polymer may be formed into shape by extruding or moulding, for example.

The electrically conductive element is preferably formed such that it yields when subjected to a load, for example when a helicopter lands on the apparatus and rests upon one or more of the electrically conductive elements those elements yield in reacting to the force exerted thereon by the helicopter.

According to the invention an electrical conductor is encased in the conductive polymer material. Advantageously, the electrical conductor is metallic and more preferably the electrical conductor is in the form of a wire or a mesh. Preferably, the electrical conductor extends longitudinally through the conductive polymer. Still more preferably, the electrical conductor is situated approximately 0.5mm below a surface, preferably the upper surface, of the conductive element.

The electrically conductive polymer may comprise a polymer loaded with carbon black. Alternatively, the conductive polymer may comprise a polymer loaded with small metal pieces, such as metal filaments.

Preferably, the electrically conductive elements are so shaped and dimension that when installed in one of the said channels in the base, the upper surface of the electrically conductive element lies in substantially the same plane as the upper surface of the base and advantageously, protrudes just above the upper surface of the base. This ensures good contact between the bird's foot and the electrically conductive elements.

The electrically conductive elements each comprise upper and lower surfaces extending between spaced apart side walls. Preferably, at least the corners where the lower surface joins the side walls are rounded. This provides the advantage that the electrically conductive elements may be more easily inserted into and removed from the base.

The base may be formed of a rubber material, which is preferably strongly resilient and hard. In one embodiment the base includes drain holes.

The base is advantageously formed of a material which is sufficiently deformable to allow the base to adopt a shape substantially corresponding to the shape of the surface upon which it is laid.

Preferably, in use the apparatus is laid out on a surface an attached thereto by means of adhesive.

In use, adjacent electrically conductive elements are connected alternately to a positive electrical current and to earth, or a negative electrical current respectively. In this way, when a bird lands on the apparatus with its feet straddling adjacent electrically conductive elements electric current passes from the positively charged element, through the bird, to the earthed or negatively charged element. Preferably, the electric current discharging through the bird is sufficient to shock, but not kill the bird.

By mounting the electrically conductive elements in channels formed in a base, and by forming the electrically conductive elements in a shape corresponding to the shape of the channels, the apparatus is capable supporting very heavy loads. For example, the apparatus may be laid out on a helicopter landing pad, and a helicopter may land upon it, without causing significant damage.

Where the apparatus is deployed on a surface over which personnel are required to walk, for example a helicopter landing pad, a switch would be provided in the electrical supply to the apparatus. The electrical supply may then be switched off when personnel need to walk over the apparatus to and from the helicopter.

Use of the ramp is not confined to use on helicopter landing pads or take-off and landing facilities for other types of aircraft. The apparatus may be deployed around the edges of buildings, or on ledges in the same way that other devices of the prior art are deployed. In such an example, the apparatus may comprise two or three or four channels for example, with the size of the base being specified to fit on the surface where the apparatus is to be used. For such uses the materials from which the base and the electrically conductive element are formed need not be so strong, since they would not need to carry the weight of a large vehicle. Further, the material of the base may be specified such that it allows the apparatus to rolled up.

### Brief Description of the Drawings

In the drawings, which illustrate preferred embodiments of an apparatus for delivering an electric shock according to the invention, and are by way of example:
Figure 1 is an end view of the mat in its assembled form;
Figure 2 is an end exploded view of the mat illustrated in Figure 1;
Figure 3 is a cross-sectional elevation of an electrically conductive element of the mat illustrated in Figures 1 or 2;
Figure 4 is schematic representation of the mat illustrated in Figures 1 to 3;
Figure 5a is a schematic representation of an alternative embodiment of the invention;
Figure 5b is a schematic representation resembling more closely the actual size of the mat and its component parts.

### Detailed Description of the Preferred Embodiments

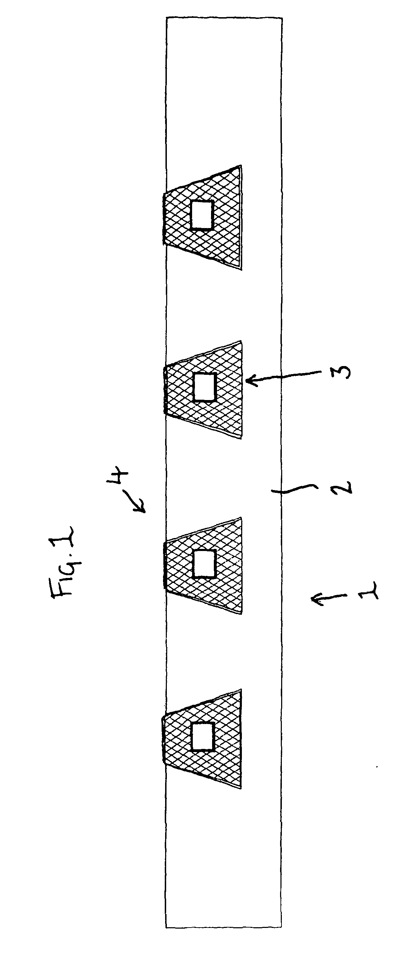

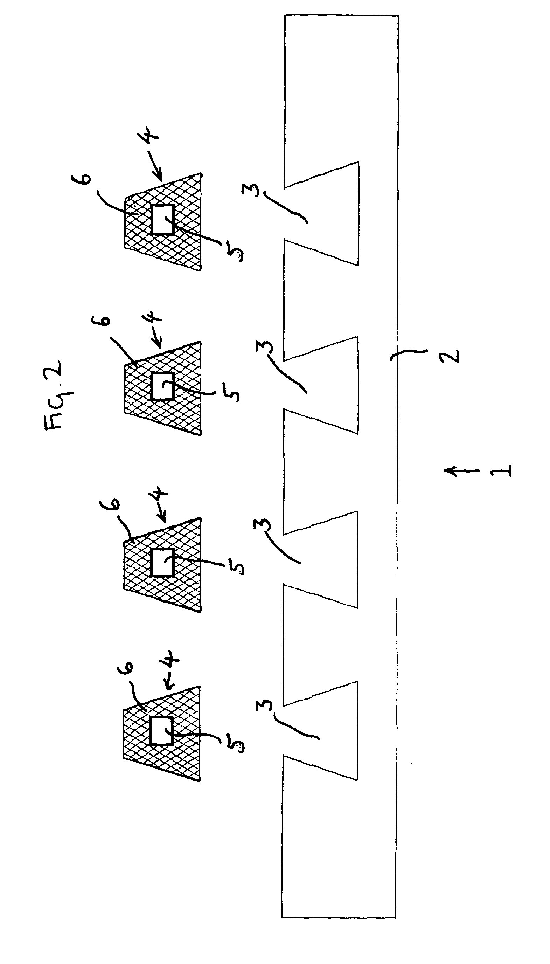

Referring now to Figures 1 and 2, the apparatus according to the invention is embodied in a mat 1 comprising a base 2 formed of a non-conductive material, such as rubber or neoprene for example and having formed therein a series of channels 3. As can be seen from Figures 1 and 2, the shape of the channels is dove-tailed in cross-section. The channels 3 receive electrically conductive elements 4, which in the present example comprise a metallic conductive wire 5, formed of copper for example, surrounded by a conductive polymer 6. The conductive polymer 6 allows the conductive element 4 to be formed into a dove-tailed shape that is dimensioned so as to fit tightly into a channel 3.

The mat 1 is preferably assembled by aligning the conductive elements 4 with the channels 3 of the base 2, such that the elements 4 are positioned above the channels 3. The base 2 and elements 4 are then passed between rollers resulting in the elements 4 being pressed into the channels 3.

The shape of the channels 3 and the corresponding shape of the conductive elements 4 provides two advantages. First, the conductive elements are conveniently secured in the base 2 without the need for any adhesives or other fasteners, and second the manner of securing the conductive element 4 in the base 2 means that the greater the amount of force exerted on the upper surface of the mat 1, the more securely the conductive elements 4 are held in place, whether the force exerted on the mat is exerted between or on the conductive elements 2.

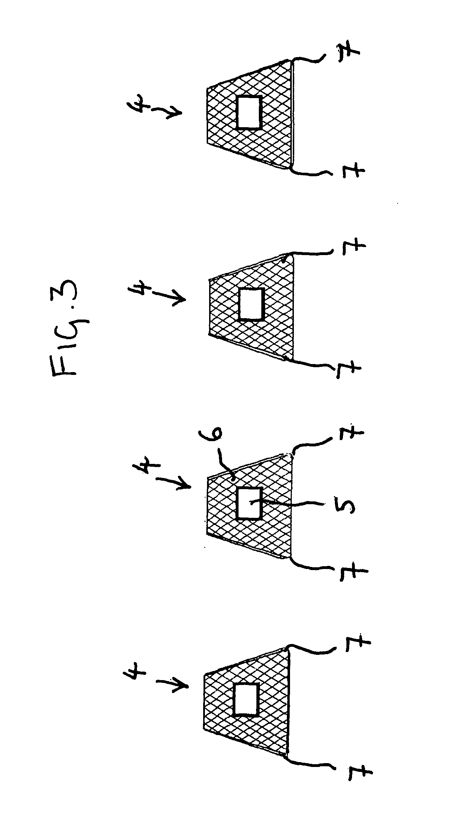

As can be seen from Figure 3, the edges 7 of the conductive elements 3 are rounded, which facilitates insertion and removal of the conductive elements from the base.

The distance between the conductive elements 4 is small, thereby minimising the possibility of a bird landing on the mat and failing to extend a foot across two adjacent conductive elements 4. For example, the upper surface of the conductive element may be approximately 7 mm, and distance between adjacent conductive elements may be approximately 13 mm.

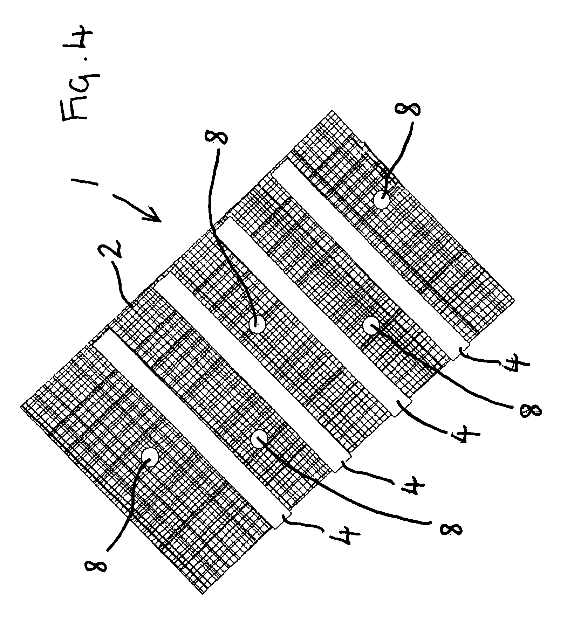

The mat 1 is laid on a surface, for example, the upper surface of a helicopter landing pad, such as might be found on an oil rig, or the flight deck of an aircraft carrier. As can be seen from Figure 4, the base 2 may be provided with drainage holes 8, which in use are aligned with drainage channels of a supporting structure.

The mat 1 may be attached to a surface by means of adhesive. The surface to which the mat is to be attached is cleaned, adhesive is applied to the underside of the mat (without applying adhesive over the drainage holes 6) and/or the surface to which the mat is to be attached. The mat is then presented to the said surface, pressed down firmly to remove any air bubbles and the adhesive is allowed to cure.

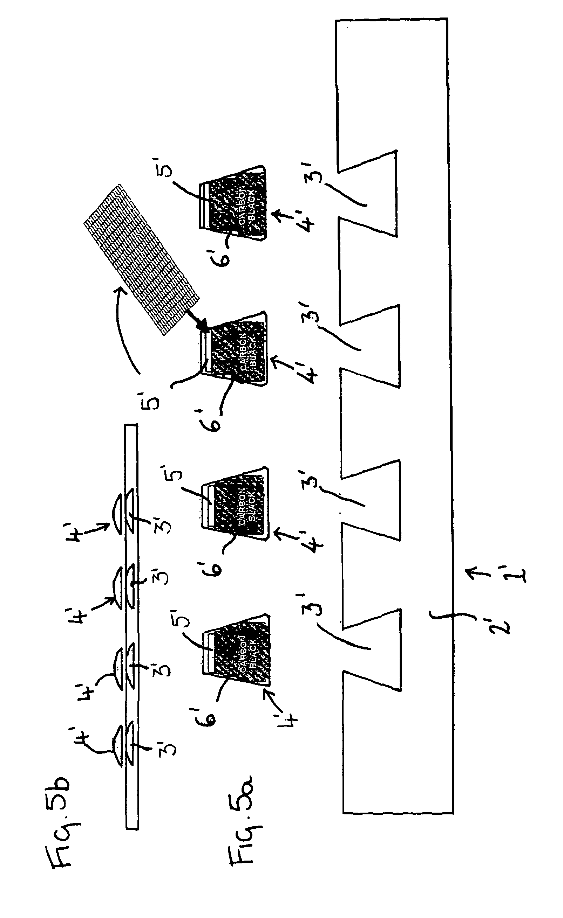

Figures 5a and 5b illustrate an alternative embodiment of a mat of the invention. Parts common to the embodiment illustrated in Figures 5a and 5b and the embodiment illustrated in Figures 1 to 4 have been given like reference numerals, with the addition of the symbol' to the reference numerals in Figures 5a and 5b.

The principal difference between the embodiment of Figures 1 to 4 and the embodiments of Figures 5a and 5b lies in the construction of the conductive elements. Whereas in Figures 1 to 4 the electrically conductive elements 4 comprise a metallic conductive wire 5 surrounded by a conductive polymer 6, in the embodiment of Figures 5a and 5b the conductive element 4' comprises a metallic mesh 5' surrounded by conductive polymer 6'. The conductive polymer 6' may be of the same formulation as described above. In the example, the metallic mesh 5' is substantially flat and is situated just below the upper surface of the conductive polymer 6', in fact the metallic mesh 5' is situated about 0.5mm below the surface of the conductive polymer 6'.

As with the embodiment illustrated in Figures 1 to 4, the conductive polymer 6' allows the conductive element 4' to be formed into a dove-tailed shape that is dimensioned so as to fit tightly into a channel 3'.

Figure 5b shows the mat 1' in a scale closer to actual size than the scale indicated in Figure 5a. In actual size, the conductive elements 4' and the base 2' are not as deep as indicated in Figure 5a.

The mat of the invention is sufficiently strong to bear the weight of an aircraft, such as a helicopter, without damage occurring to the copper wire encased in the conductive polymer.

## Claims

1. An electric shock delivery apparatus (1, 1') comprising a base (2, 2') of an electrically insulating material, the base having formed therein a plurality of channels (3, 3'), the apparatus further comprising a plurality of electrically conductive elements (4, 4'), each associated with a respective one of the channels (3, 3'), wherein the cross-sectional shape and dimensions of the channel (3, 3') and the cross-sectional shape and dimensions of the electrically conductive element (4, 4') substantially correspond, wherein the channels (3, 3') and the electrically conductive elements (4, 4') have a dovetail cross-sectional shape and the electrically conductive elements (4, 4') are a press-fit into the channels (3, 3'); and wherein the electrical conductor (5, 5') is situated towards the upper surface of the dovetail cross-sectional shaped electrically conductive element (4) **characterised in that** the base (2, 2') comprises an upper surface and the opening of the channels (3, 3') lie in the same plane as the upper surface of the base (2, 2') and the electrically conductive element (4, 4') further comprises an electrical conductor (5, 5') encased in a conductive polymer material (6, 6').

2. Apparatus according to Claim 1, wherein the electrically conductive element (4, 4') comprises a conductive polymer material, the conductive element (4, 4') is formed into the said shape and dimension by forming the said conductive polymer material (6, 6').

3. Apparatus according to Claim 1 or 2, wherein the material properties of the conductive element (4, 4') are such that the said conductive element yields when subjected to a load.

4. Apparatus according to any preceding claim, wherein the electrical conductor (5, 5') is a wire or a mesh.

5. Apparatus according to any preceding claim, wherein the electrical conductor (5, 5') is metallic.

6. Apparatus according to any preceding claim, wherein the electrically conductive polymer comprises a polymer loaded with carbon black and/or small metal pieces.

7. Apparatus according to any preceding claim, wherein the electrically conductive elements (4, 4') are so shaped and dimension that when installed in one of the said channels (3, 3') in the base (2, 2'), the upper surface of the electrically conductive element (4, 4') lies in substantially the same plane as the upper surface of the base (2, 2').

8. Apparatus according to Claim 7, wherein the upper surface of the electrically conductive element (4, 4') protrudes just above the upper surface of the base (2, 2').

9. Apparatus according to any preceding claim, wherein the electrically conductive elements (4, 4') each comprise upper and lower surfaces extending between spaced apart side walls, wherein at least the corners (7) where the lower surface joins the side walls are rounded.

10. Apparatus according to any preceding claim, wherein the base (2, 2') is formed of a rubber material.

11. Apparatus according to any preceding claim, wherein the material from which the base (2, 2') is formed is strongly resilient.

12. Apparatus according to any preceding claim, further comprising electrical connections to each of the electrically conductive elements (4, 4'), wherein adjacent electrically conductive elements (4, 4') are connected alternately to a positive electrical current and to earth, or a negative electrical current respectively.

## Patentansprüche

1. Vorrichtung (1, 1') zur Abgabe von Stromstößen, die eine Basis (2, 2') aus einem elektrisch isolierenden Material umfasst, wobei die Basis mehrere Kanäle (3, 3') darin ausgebildet aufweist, wobei die Vorrichtung weiterhin mehrere elektrisch leitende Elemente (4, 4') umfasst, die jeweils mit einem jeweiligen der Kanäle (3, 3') in Verbindung stehen, wobei die Querschnittsform und die Abmessungen des Kanals (3, 3') und die Querschnittsform und die Abmessungen des elektrisch leitenden Elements (4, 4') im Wesentlichen übereinstimmen, wobei die Kanäle (3, 3') und die elektrisch leitenden Elemente (4, 4') eine Schwalbenschwanz-Querschnittsform haben und die elektrisch leitenden Elemente (4, 4') eine Presspassung in den Kanälen (3, 3') sind; und wobei der elektrische Leiter (5, 5') sich in Richtung der oberen Fläche des elektrisch leitenden Elements (4) mit Schwalbenschwanz-Querschnittsform befindet, **dadurch gekennzeichnet, dass** die Basis (2, 2') eine obere Fläche umfasst und die Öffnung der Kanäle (3, 3') in derselben Ebene wie die obere Fläche der Basis (2, 2') liegt und das elektrisch leitende Element (4, 4') weiterhin einen elektrischen Leiter (5, 5') umfasst, der in einem leitenden Polymermaterial (6, 6') eingeschlossen ist.

2. Vorrichtung nach Anspruch 1, wobei das elektrisch leitende Element (4, 4') ein leitendes Polymermaterial umfasst, wobei das leitende Element (4, 4') zu der Form und der Abmessung geformt wird, indem das leitende Polymermaterial (6, 6') geformt wird.

3. Vorrichtung nach Anspruch 1 oder 2, wobei die Materialeigenschaften des leitenden Elements (4, 4') derart sind, dass das leitende Element nachgibt, wenn es einer Last ausgesetzt wird.

4. Vorrichtung nach einem vorhergehenden Anspruch, wobei der elektrische Leiter (5, 5') ein Draht oder ein Maschengeflecht ist.

5. Vorrichtung nach einem vorhergehenden Anspruch, wobei der elektrische Leiter (5, 5') metallisch ist.

6. Vorrichtung nach einem vorhergehenden Anspruch, wobei das elektrisch leitende Polymer ein Polymer umfasst, das mit Ruß und/oder kleinen Metallteilen gefüllt ist.

7. Vorrichtung nach einem vorhergehenden Anspruch, wobei die elektrisch leitenden Elemente (4, 4') so geformt und abgemessen sind, dass, wenn sie in einen der Kanäle (3, 3') in der Basis (2, 2') eingebaut werden, die obere Fläche des elektrisch leitenden Elements (4, 4') im Wesentlichen in derselben Ebene wie die obere Fläche der Basis (2, 2') liegt.

8. Vorrichtung nach Anspruch 7, wobei die obere Fläche des elektrisch leitenden Elements (4, 4') unmittelbar über der oberen Fläche der Basis (2, 2') hervorsteht.

9. Vorrichtung nach einem vorhergehenden Anspruch, wobei die elektrisch leitenden Elemente (4, 4') jeweils obere und untere Flächen umfassen, die sich zwischen voneinander beabstandeten Seitenwänden erstrecken, wobei mindestens die Ecken (7), an denen die untere Fläche sich an die Seitenwände anfügt, abgerundet sind.

10. Vorrichtung nach einem vorhergehenden Anspruch, wobei die Basis (2, 2') aus einem Kautschukmaterial hergestellt ist.

11. Vorrichtung nach einem vorhergehenden Anspruch, wobei das Material, aus dem die Basis (2, 2') hergestellt ist, sehr elastisch ist.

12. Vorrichtung nach einem vorhergehenden Anspruch, die weiterhin elektrische Verbindungen zu jedem der elektrisch leitenden Elemente (4, 4') umfasst, wobei benachbarte elektrisch leitende Elemente (4, 4') alternierend mit einem positiven elektrischen Strom und mit Masse bzw. einem negativen elektrischen Strom verbunden sind.

## Revendications

1. Appareil de délivrance de chocs électriques (1, 1') comprenant une base (2, 2') en un matériau électriquement isolant, la base possédant une pluralité de sections en creux (3, 3') qui sont formées dans celle-ci, l'appareil comprenant en outre une pluralité d'éléments électriquement conducteurs (4, 4'), chacun étant associé à une section en creux respective parmi les sections en creux (3, 3'), cas dans lequel les dimensions et la forme en coupe transversale de la section en creux (3, 3'), ainsi que les dimensions et la forme en coupe transversale de l'élément électriquement conducteur (4, 4') correspondent sensiblement, cas dans lequel les sections en creux (3, 3') et les éléments électriquement conducteurs (4, 4') ont une forme en queue d'aronde en coupe transversale, et les éléments électriquement conducteurs (4, 4') sont posés par emmanchement à force dans les sections en creux (3, 3'), et cas dans lequel le conducteur électrique (5, 5') est situé vers la surface supérieure de l'élément électriquement conducteur à forme en queue d'aronde en coupe transversale (4), **caractérisé en ce que** la base (2, 2') comporte une surface supérieure et l'ouverture des sections en creux (3, 3') se trouve dans le même plan que la surface supérieure de la base (2, 2'), et l'élément électriquement conducteur (4, 4') comporte en outre un conducteur électrique (5, 5') qui est enfermé dans une matière polymère conductrice (6, 6').

2. Appareil selon la revendication 1, l'élément électriquement conducteur (4, 4') comprenant une matière polymère conductrice, l'élément conducteur (4, 4') étant formé dans lesdites taille et dimension grâce au formage de ladite matière polymère conductrice (6, 6').

3. Appareil selon la revendication 1 ou 2, les propriétés matérielles de l'élément conducteur (4, 4') étant telles que ledit élément conducteur cède lorsqu'il est soumis à une charge.

4. Appareil selon l'une quelconque des revendications précédentes, le conducteur électrique (5, 5') étant un fil métallique ou un treillis.

5. Appareil selon l'une quelconque des revendications précédentes, le conducteur électrique (5, 5') étant métallique.

6. Appareil selon l'une quelconque des revendications précédentes, le polymère électriquement conducteur comprenant un polymère avec une charge de noir de carbone et/ou de petites pièces métalliques.

7. Appareil selon l'une quelconque des revendications précédentes, les éléments électriquement conducteurs (4, 4') étant façonnés et dimensionnés de telle sorte que, lors de leur installation dans l'une desdites sections en creux (3, 3') dans la base (2, 2'), la surface supérieure de l'élément électriquement conducteur (4, 4') se trouve dans sensiblement le même plan que la surface supérieure de la base (2, 2').

8. Appareil selon la revendication 7, la surface supérieure de l'élément électriquement conducteur (4, 4') faisant saillie tout juste au-dessus de la surface supérieure de la base (2, 2').

9. Appareil selon l'une quelconque des revendications précédentes, les éléments électriquement conducteurs (4, 4') comprenant chacun des surfaces supérieure et inférieure qui s'étendent entre des parois latérales espacées l'une de l'autre, cas dans lequel au moins les coins (7) sont arrondis à l'endroit où la surface inférieure rejoint les parois latérales.

10. Appareil selon l'une quelconque des revendications précédentes, la base (2, 2') étant formée en un matériau caoutchouc.

11. Appareil selon l'une quelconque des revendications précédentes, le matériau à partir duquel la base (2, 2') est formée offrant une résistance élevée.

12. Appareil selon l'une quelconque des revendications précédentes, comprenant en outre des connexions électriques vers chacun des éléments électriquement conducteurs (4, 4'), cas dans lequel des éléments électriquement conducteurs (4, 4') en position adjacente sont connectés en alternance à un courant électrique positif et à la terre, ou à un courant électrique négatif respectivement.
